Europäisches Patentamt

European Patent Office

Office européen des brevets

(11) Veröffentlichungsnummer: **0 279 470**
**A1**

(12) **EUROPÄISCHE PATENTANMELDUNG**

(21) Anmeldenummer: **88200002.9**

(22) Anmeldetag: **05.01.88**

(51) Int. Cl.⁴ **C01F 5/34**

(30) Priorität: **29.01.87 DE 3702592**

(43) Veröffentlichungstag der Anmeldung:
**24.08.88 Patentblatt 88/34**

(84) Benannte Vertragsstaaten:
**DE ES FR GB IT**

(71) Anmelder: **METALLGESELLSCHAFT AG**
**Reuterweg 14 Postfach 3724**
**D-6000 Frankfurt/M.1(DE)**

(72) Erfinder: **Beckmann, Manfred**
**Jean-Philipp-Anlage 17**
**D-6078 Neu-Isenburg(DE)**

(54) **Verfahren zum Herstellen von praktisch wasserfreiem Magnesiumchlorid aus hydratisiertem Magnesiumchlorid.**

(57) Wasserhaltiges Magnesiumchlorid wird in der ersten Trocknungsstufe als Schmelze mit Temperaturen von 200 bis 300°C einem Zerstäubungsturm zugeführt, in welchem es im Gleichstrom mit Trocknungsgas von 500 bis 900°C zerstäubt wird. Das dabei entstehende teilentwässerte Zwischenprodukt wird mit Temperaturen von 250 bis 400°C direkt der zweiten Trocknungsstufe aufgegeben. Diese zweite Trocknungsstufe besteht aus drei bis sechs hintereinandergeschalteten Kontakteinheiten, in welchen das Zwischenprodukt mit heißem HCl-Gas in Kontakt gebracht wird. Das HCl-Gas tritt mit Temperaturen von 400 bis 500°C in die letzte Kontakteinheit ein und verläßt die erste Kontakteinheit mit einer Temperatur im Bereich von 100 bis 200°C. Jede Kontakteinheit weist mindestens eine vertikale pneumatische Förderstrecke mit unteren Einlässen für das Zwischenprodukt und das heiße HCl-Gas sowie am oberen Ende einen Separator zum Trennen des die Förderstrecke verlassenden Gas-Feststoff-Gemisches auf. Auf diese Weise wird Magnesiumchlorid mit einem Wassergehalt von höchstens 0,5 Gew.% erzeugt.

**EP 0 279 470 A1**

## Verfahren zum Herstellen von praktisch wasserfreiem Magnesiumchlorid aus hydratisiertem Magnesiumchlorid

Die Erfindung betrifft ein Verfahren zum Entwässern von wasserhaltigem Magnesiumchlorid auf einen Wassergehalt des entwässerten Produkts von höchstens 0,5 Gew.%.

Schon seit langem beschäftigt man sich mit der Herstellung von weitgehend wasserfreiem Magnesiumchlorid mit möglichst geringem Gehalt an Hydrolyse-Produkten, wie MgOCl oder MgO, zum Einsatz in der Schmelzfluß-Elektrolyse und zum Gewinnen von metallischem Magnesium. Es ist bekannt, daß sowohl Wassergehalte als auch Gehalte an Hydrolyse-Produkten die Schmelzfluß-Elektrolyse des Magnesiumchlorids sowie das Betriebsverhalten der Elektrolysezelle signifikant beeinflussen. Deshalb sucht man schon seit langer Zeit wirtschaftliche Verfahren zur Gewinnung von wasserfreiem, nicht hydrolysiertem Magnesiumchlorid.

Bekannte Verfahren zum Gewinnen praktisch wasserfreien Magnesiumchlorids sind in den deutschen Patentschriften 20 52 470 und 20 53 189, mit denen die US-Patentschriften 3 742 100 und 3 760 050 korrespondieren, beschrieben. Hierbei werden mehrstufige Verfahren angewandt, wobei der letzte und entscheidende Trocknungsschritt im Wirbelschicht-oder Schachtofen erfolgt. Dieser letzten Trocknungsstufe werden relativ grobkörnige, vorentwässerte Teilchen zugeführt.

Der Erfindung liegt die Aufgabe zugrunde, ein möglichst wirtschaftliches Verfahren zu schaffen, wobei die Trocknung in der letzten Trocknungsstufe unter günstigen Voraussetzungen erfolgen soll. Erfindungsgemäß geschieht dies dadurch, daß man das wasserhaltige Magnesiumchlorid in der ersten Trocknungsstufe als Schmelze mit Temperaturen von 200 bis 300°C einem Zerstäubungsturm zuführt, in welchem es im Gleichstrom mit Trocknungsgas von 500 bis 900°C zerstäubt wird, wobei ein feinteiliges Zwischenprodukt mit 1,5 bis 2 Mol $H_2O$ pro Mol $MgCl_2$ entsteht, und daß man das Zwischenprodukt mit Temperaturen von 250 bis 400°C aus dem Zerstäubungsturm direkt der zweiten Trocknungsstufe aufgibt, die aus drei bis sechs hintereinandergeschalteten Kontakteinheiten besteht, in welchen das Zwischenprodukt mit heißem HCl-Gas in Kontakt gebracht wird, wobei das HCl-Gas mit Temperaturen von 400 bis 500°C in die letzte Kontakteinheit eintritt und die erste Kontakteinheit mit einer Temperatur im Bereich von 100 bis 200°C verläßt, und jede Kontakteinheit mindestens eine vertikale pneumatische Förderstrecke mit unteren Einlässen für das Zwischenprodukt und das heiße HCl-Gas und einen Separator zum Trennen des die Förderstrecke am oberen Ende verlassenden Gas-Feststoff-Gemisches aufweist.

Bei dem feinteiligen Zwischenprodukt aus dem Zerstäubungsturm handelt es sich üblicherweise um zerbrechliche Hohlkügelchen (hollow beeds) und deren Bruchstücke. Die dünnen Teilchen dieses Zwischenprodukts weisen minimale Diffusionsstrecken für Wasser und ein ideales Verhältnis von Oberfläche zu Masse auf, so daß Wärme-und Stoffaustauschvorgänge rasch ablaufen können. Zwischen der ersten und der zweiten Trocknungsstufe ist eine Zwischenbehandlung nicht erforderlich, so daß in der zweiten Trocknungsstufe die Endtemperatur des Zwischenprodukts aus dem Zerstäubungsturm ausgenutzt werden kann.

Vorteilhafterweise tritt das heiße HCl-Gas mit Temperaturen von mindestens 425°C in die vertikale pneumatische Förderstrecke der letzten Kontakteinheit ein. Damit ist sichergestellt, daß das eventuell im Feststoff noch vorhandene MgO mit HCl zu $MgCl_2$ und $H_2O$ umgewandelt wird. Ferner wird man die kälteste Kontakteinheit, das ist die erste, möglichst oberhalb der Verklebungstemperatur des aus der ersten Trocknungsstufe kommenden Magnesiumchlorids arbeiten lassen. Zu diesem Zweck liegen die Temperaturen des HCl-Gases beim Eintritt in die erste Kontakteinheit vorzugsweise im Bereich von 100 bis 150°C.

Die zu jeder Kontakteinheit gehörende vertikale pneumatische Förderstrecke sorgt für einen intensiven Kontakt zwischen heißem HCl-Gas und dem zu trocknenden feinteiligen Feststoff. Aus Steuerungsgründen ist es zweckmäßig, daß mindestens in einer Kontakteinheit ein Teil des im Separator abgetrennten Feststoffes zum unteren Einlaß der vertikalen pneumatischen Förderstrecke derselben Kontakteinheit zurückgeführt werden kann. Üblicherweise sind alle Kontakteinheiten mit einer solchen Rückführung für Feststoff ausgerüstet. Beim üblichen Betrieb werden zwischen 30 und 70 % der einer Kontakteinheit zugeführten Feststoffmenge in dieselbe Kontakteinheit rezirkuliert. Auf diese Weise lassen sich Massenstromdichten und Gesamtverweilzeiten verlängern und es wird sichergestellt, daß die Enthalpie des Trocknungsgases bestmöglich ausgenutzt wird.

In der ersten Trocknungsstufe, die im wesentlichen aus dem Zerstäubungsturm besteht, arbeitet man üblicherweise bei Atmosphärendruck. In der zweiten Trocknungsstufe kann man ebenfalls Atmosphärendruck anwenden, es empfiehlt sich aber, um mit verringerten Apparatevolumina auszukommen, in der zweiten Trocknungsstufe erhöhten Druck z.B. im Bereich von 1,5 bis 20 bar anzuwenden.

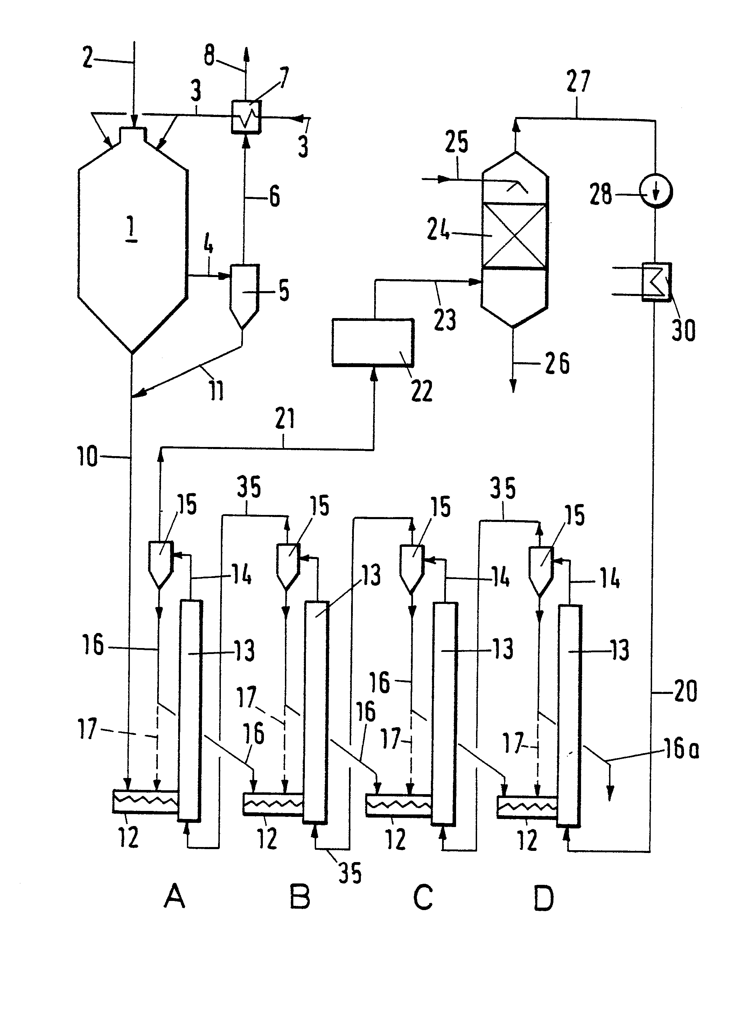

Eine Ausgestaltungsmöglichkeit des Verfahrens wird mit Hilfe der Zeichnung erläutert.

Dem Zerstäubungsturm (1) führt man durch die Leitung (2) Trocknungsgas mit Temperaturen im Bereich von 500 bis 900°C zu. Dieses Trocknungsgas kann z.B. durch Verbrennen von Erdgas gewonnen sein. Aus der Leitung (3), die sich vor Eintritt in den Turm (1) verzweigt, wird geschmolzenes, wasserhaltiges Magnesiumchlorid mit Temperaturen von 200 bis 300°C zugeführt und in den Turm (1) hinein versprüht. Unter dem Gleichstrom von Trocknungsgas und versprühter Schmelze bildet das Magnesiumchlorid Hohlkügelchen, die sich am Fuß des Turms (1) sammeln. Die Trocknungsgase verlassen den Turm (1) durch die Leitung (4), wobei man in einem Zyklon (5) Feststoffe abtrennt. Das gebrauchte Trocknungsgas wird dann in der Leitung (6) durch einen Wärmeaustauscher (7) geführt, wo es im indirekten Kontakt mit der Schmelze der Leitung (3) Wärme abgibt. Das in der Leitung (8) abströmende Gas wird einer nicht dargestellten Entstaubung zugeführt.

Das im Zerstäubungsturm (1) entstandene, teilentwässerte Zwischenprodukt verläßt den Turm (1) in der Leitung (10), in welche auch die Feststoffleitung (11) aus dem Zyklon (5) mündet. Die Feststoffe der Leitung (10) werden nun mit Temperaturen von etwa 250 bis 400°C und pro Mol $MgCl_2$ mit 1,5 bis 2 Mol $H_2O$ sowie Resten von MgO der zweiten Trocknungsstufe direkt zugeführt. Die zweite Trocknungsstufe besteht aus mehreren hintereinandergeschalteten Kontakteinheiten, die im wesentlichen gleich ausgestaltet sind. Die Einheiten weisen eine horizontale Förderstrecke (12), z.B. einen Schneckenförderer, daran anschließend eine vertikale pneumatische Förderstrecke (13), eine Ableitung (14) für Gas-Feststoff-Gemisch, einen Separator (15), z.B. einen Zyklon, eine Feststoffleitung (16) und eine Rückführleitung (17) auf, die aus Gründen der besseren Unterscheidbarkeit gestrichelt eingezeichnet ist. Zum Fuß einer jeden vertikalen pneumatischen Förderstrecke (13) wird heißes HCl-Gas aus der Leitung (35) geleitet, das die Feststoffe nach oben mitnimmt und im Separator (15) wieder von den Feststoffen getrennt wird.

Das feinteilige Zwischenprodukt aus der Leitung (10) gelangt zunächst in die erste Kontakteinheit (A), anschließend durch die Feststoffleitung (16) in die Kontakteinheit (B), darauf in die Kontakteinheit (C) und schließlich in die letzte Kontakteinheit (D). Entwässertes Magnesiumchlorid mit einem Wassergehalt von höchstens 0,5 Gew.% wird in der Leitung (16a) abgezogen. Abweichend von den vier Kontakteinheiten der Zeichnung kann man z.B. auch mit drei, fünf oder sechs Kontakteinheiten arbeiten.

In der zweiten Trocknungsstufe erfolgt die Trocknung mit heißem HCl-Gas aus der Leitung (20), das zunächst Temperaturen im Bereich von 400 bis 500°C aufweist. Dieses Trocknungsgas durchströmt die Kontakteinheiten in der Reihenfolge D, C, B und A und gelangt mit Temperaturen von schließlich noch 100 bis 200°C in der Leitung (21) zunächst zu einem Entstaubungsfilter (22). In der Leitung (23) wird das gebrauchte Trocknungsgas einem Trocknungsturm (24) zugeführt, wobei ihm im direkten Kontakt mit konzentrierter Schwefelsäure aus der Leitung (25) das Wasser weitestgehend entzogen wird. Die Schwefelsäure der Leitung (25) weist Konzentrationen im Bereich von 75 bis 96 Gew.% auf, ihre Temperaturen liegen im Bereich von 30 bis 60°C. Die in der Leitung (26) abfließende Schwefelsäure wird einer nicht dargestellten Eindampfanlage zugeführt, bevor sie wiederverwendet wird. Unter der Wirkung der Kreislaufpumpe (28) wird das getrocknete HCl-Gas in der Leitung (27) aus dem Turm (24) abgezogen und zunächst durch einen Erhitzer (30) geleitet, bevor es als Trocknungsgas wiederverwendet wird.

Der restliche Wassergehalt im Produkt der Leitung (16a) hängt verständlicherweise vom Feuchtigkeitsgehalt des in der Leitung (20) herangeführten Trocknungsgases ab und dieser Feuchtigkeitsgehalt ist durch die Trocknungsfähigkeit der konzentrierten Schwefelsäure im Trocknungsturm (24) gegeben. Will man ein praktisch wasserfreies Produkt in der Leitung (16a) abziehen, muß man die Konzentration der in der Leitung (25) herangeführten Schwefelsäure auf etwa 96 Gew.% steigern. Bekannt ist auch, daß die konzentrierte Schwefelsäure um so mehr Wasser aufnehmen kann, je kälter sie ist.

## Ansprüche

1. Verfahren zum Entwässern von wasserhaltigem Magnesiumchlorid auf einen Wassergehalt des entwässerten Produkts von höchstens 0,5 Gew.%, dadurch gekennzeichnet, daß man das wasserhaltige Magnesiumchlorid in der ersten Trocknungsstufe als Schmelze mit Temperaturen von 200 bis 300°C einem Zerstäubungsturm zuführt, in welchem es im Gleichstrom mit Trocknungsgas von 500 bis 900°C zerstäubt wird, wobei ein feinteiliges Zwischenprodukt mit 1,5 bis 2 Mol $H_2O$ pro Mol $MgCl_2$ entsteht, und daß man das Zwischenprodukt mit Temperaturen von 250 bis 400°C aus dem Zerstäubungsturm direkt der zweiten Trocknungsstufe aufgibt, die aus drei bis sechs hintereinandergeschalteten Kontakteinheiten besteht, in welchen das Zwischenprodukt mit heißem HCl-Gas in Kontakt gebracht wird, wobei das HCl-Gas mit Temperaturen von 400 bis 500°C in die letzte Kontakteinheit eintritt und die erste Kontakteinheit mit einer Temperatur im Bereich von 100 bis 200°C verläßt, und jede Kontakteinheit mindestens eine vertikale pneumatische Förderstrecke mit unteren Einlässen für das Zwischenprodukt und das heiße HCl-Gas und einen Separator zum Trennen des die Förderstrecke am oberen Ende verlassenden Gas-Feststoff-Gemisches aufweist.

2. Verfahren nach Anspruch 1, dadurch gekennzeichnet, daß das feinteilige Zwischenprodukt aus dem Zerstäubungsturm aus Hohlkügelchen (hollow beeds) und deren Bruchstücken besteht.

3. Verfahren nach Anspruch 1 oder 2, dadurch gekennzeichnet, daß das heiße HCl-Gas mit einer Temperatur von mindestens 425°C in die vertikale pneumatische Förderstrecke der letzten Kontakteinheit eintritt.

4. Verfahren nach Anspruch 1 oder einem der folgenden, dadurch gekennzeichnet, daß das heiße HCl-Gas die erste Kontakteinheit mit Temperaturen von höchstens 150°C verläßt.

5. Verfahren nach Anspruch 1 oder einem der folgenden, dadurch gekennzeichnet, daß in mindestens einer Kontakteinheit ein Teil des im Separator abgetrennten Feststoffs zum unteren Einlaß der vertikalen pneumatischen Förderstrecke derselben Kontakteinheit zurückgeführt wird.

6. Verfahren nach Anspruch 1 oder einem der folgenden, dadurch gekennzeichnet, daß das aus der ersten Kontakteinheit abgezogene HCl-Gas entstaubt, im Kontakt mit konzentrierter Schwefelsäure getrocknet, erhitzt und zur letzten Kontakteinheit zurückgeführt wird.

7. Verfahren nach Anspruch 6, dadurch gekennzeichnet, daß die zum Trocknen verwendete Schwefelsäure Konzentrationen im Bereich von 75 bis 96 Gew.% aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 052 470 (NORSK HYDIO)<br>* Seiten 16,17,18; Ansprüche 1,8,10 *<br>--- | 1 | C 01 F 5/34 |
| A | DE-B-1 102 122 (VEB)<br>* Spalte 3 *<br>--- | 1 | |
| A | DE-C- 748 089 (H. GROTHE)<br>--- | | |
| A | US-A-1 479 982 (W.R. COLLINGS)<br>----- | | |

RECHERCHIERTE
SACHGEBIETE (Int. Cl.4)

C 01 F

Der vorliegende Recherchenbericht wurde für alle Patentansprüche erstellt

| Recherchenort | Abschlußdatum der Recherche | Prüfer |
|---|---|---|
| DEN HAAG | 03-05-1988 | LIBBERECHT-VERBEECK E.M. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
Dokument

EPO FORM 1503 03.82 (P0403)